# EUROPEAN PATENT APPLICATION

(11) **EP 3 200 031 A1**
(43) Date of publication of application: **02.08.2017**
(21) Application number: 16201902.0
(22) Date of filing: 02.12.2016
(51) Int. Cl.: G04G 21/04, G04G 21/00, G06F 3/01

(54) **WRIST WATCH EMBEDDED WITH A WIRELESS CONTROL MODULE**

(30) Priority: 01.02.2016 TW 105103200
(71) Applicant: Princo Corp., Hsinchu (TW)
(72) Inventor: CHIU, Pei-Liang, Hsinchu City (TW)
(74) Representative: Chas. Hude A/S

(57) **Abstract**

Disclosed is a wrist watch embedded with a wireless control module that generates control commands in accordance with user's motional operations. The control commands are provided wirelessly to a particular intelligent mobile device, to control the functions of the intelligent mobile device. The motional operations comprise one or more of a shifting/swinging, rotation and knocking operation, or their combinations.

## Description

### FIELD OF THE INVENTION

The present invention relates to an apparatus for use in association with a mobile terminal and a method for controlling the mobile terminal using the apparatus, particularly to a wrist watch or a wearable device used to wirelessly operate the functions of a mobile terminal.

### BACKGROUND OF THE INVENTION

All intelligent mobile terminals have a common feature: their display and input interfaces are integrated into one touch screen. In operating an intelligent mobile terminal, typically the user needs to hold the body of the intelligent mobile terminal with one hand and operate the device with another hand. Although single-handed operation is also possible, it is not convenient. In order to provide the ability of hand-free operations, some voice-control modules have been developed, where voice recognition techniques are used to translate the vocal operation commands of the user into commands executable by the intelligent mobile terminals. However, due to the immaturity of the voice recognition techniques, the existing technology is still insufficient to meet the needs of most users. In addition, vocal input of operational commands may be annoying to nearby persons, thus not amenable to operate the intelligent mobile terminals from a distance. It is not a proper option for the operation of a mobile terminal.

In order to operate an intelligent mobile terminal from a distance, recently wearable devices that operate intelligent mobile terminals have been developed. The wearable devices are mostly in the form of a wrist watch and equipped with input elements, such as touch screen, keyboard, buttons etc., corresponding to the input elements on the intelligent mobile terminals. Such approaches substantially move or duplicate the input elements of the intelligent mobile terminals to the wearable device, such as a wrist watch, so that the user does not need to hand-hold the mobile terminal when operating. A user operates the mobile terminal simply by touching the touch screen, pressing the input keys, buttons provided in the touch screen of the wrist watch. Although such devices simplify the operation of the intelligent mobile terminal, still the user needs to enter operational commands on the input element of the wearable device. The touch screen of the wearable device is small-sized, always too small to operate comfortably and conveniently. In addition, it is not possible to install such input elements, and necessary functional modules and antennas, in a traditional wrist watch, because the traditional wrist watch does not provide an operable touch screen, input keys or buttons, to facilitate input of commands that control the intelligent mobile terminal.

One objective of this invention is to provide a novel control device for the intelligent mobile terminal. The invented wireless control device may be made in the form of a module, so that it may be embedded in a wrist watch, to enable a user wearing the wrist watch to operate the intelligent mobile terminal by simply changing the position or orientation of his/her wrist. Changes of the wrist position are detected by a motion detector provided in the control module and are translated into operation commands of the intelligent mobile terminal. The operation commands are transmitted to the intelligent mobile terminal to control its operations. As a result, operating the intelligent mobile terminal by touching the touch screen, touch keys or touch buttons with fingers is no longer necessary.

### SUMMARY OF THE INVENTION

To achieve the above objectives, the present invention provides in one aspect a wrist watch having a dial provided with a physical time scale, at least one watch hand on the dial and a movement to drive the watch hand, so to provide time information with the association of the watch hand and the time scale. The wrist watch further comprises a housing to encompass the movement, a strap connected to the housing and a wireless control functional module disposed in the housing or in the strap, to control an external device. The wireless control module comprises:
a detector unit, comprising at least one motion detector for detecting a displacement of the wrist watch as it is operated by a user and to generate a detection signal in correspondence with the displacement;
a processor unit coupled with the detector unit, to receive the detection signal of the detector unit and to match the detection signal with a motion pattern among a motion patterns stored in a memory device wherein the matched motion pattern corresponds to the displacement;
a wireless communication unit to transmit and receive wireless signals and to establish wireless communication channels with an external device upon request of the external device for exchange of data; and
a command generating unit coupled with the processor unit, to generate a motion pattern signal in a predetermined format according to motion pattern matched by the processor unit and to provide the motion pattern signal to the wireless communication unit, for transmitting to the external device.

In a preferred embodiment of the present invention, the plurality of motion pattern signal comprises at least one selected from the group consisted by a translation pattern signal, a rotation pattern signal and a knocking pattern signal.

In a particular embodiment of the present invention, the command generating unit records a plurality of motion pattern signals generated within a predetermined period and selects from a list of commands executable by the external device a command corresponding to the recorded motion pattern signals, then provides the selected command to the wireless communication unit, for transmitting to the external device. The plurality of motion pattern signals comprises at least one selected from the group consisted by a translation pattern signal, a rotation pattern signal and a knocking pattern signal.

The wireless control module of the present invention may further comprise a vibration device. The vibration device comprises:
a vibrator to generate vibrations upon receipt of a vibration command;
a vibration plate attached by the vibrator, to amplify a vibration of the vibrator; and
a controller coupled to the wireless communication unit to generate vibration commands and provide the vibration commands to the vibrator, upon receipt of a predetermined command via the wireless communication unit. The vibration command comprises instructions specifying a frequency and duration of a vibration event.

In one embodiment of the present invention, the external device is an intelligent mobile terminal and the wireless control module includes only the motion detector and the wireless communication unit, while the processor unit and the command generating unit are built in the external device in the form of a software, so to make use of the calculation, data storage and operational capabilities provided in the intelligent mobile terminal when performing functions of the processor unit and the command generating unit.

According to the present invention, users are allowed to install an application system that operates in association with a wireless control module provided in the wrist watch. The application system operates the intelligent mobile terminal to receive motion pattern signals or commands of the wireless control module, to convert the received signals/commands into operational commands of the intelligent mobile terminal in accordance with inference rules established in the application system and to provide the operational commands to related functional modules of the intelligent mobile terminal, so that the intelligent mobile terminal operates in accordance with a user's operations of the wireless control module, i.e., the wrist watch. Operation of the intelligent mobile terminal without the need of holding the intelligent mobile terminal or using finger operations is thus achieved.

The above and other objectives and advantages of the present invention will be more clearly appreciated from the following detailed description with reference to the drawings.

### BRIEF DESCRIPTION OF THE DRAWINGS

Fig. 1 shows the schematic view of a wrist watch according to an embodiment of the present invention.
Fig. 2 shows the explosion diagram of the wrist watch of Fig. 1.
Fig. 3 shows the cross-sectional view of the wrist watch of Fig. 1.
Fig. 4 is a schematic drawing showing the invented wireless control module and an intelligent mobile terminal operating in association with the wireless control module.
Fig. 5 shows the block diagram of a vibration device used in the present invention.

### DETAILED DESCRIPTION OF THE INVENTION

The present invention relates to a wrist watch embedded with a wireless control module. The invented wireless control module detects displacements of the wrist watch and generates a plurality of motion pattern signals corresponding to the displacements. Various combinations of the motion pattern signals are used to represent particular control commands, for the operation of an intelligent mobile terminal. Operating the intelligent mobile terminal using fingers thus becomes not necessary.

In the following description, embodiments of the invention will be described by using a traditional quartz watch as example. It is however appreciated by those having ordinary skills in the art that the wireless control module may be used in association with any other types of the traditional wrist watch, such as a mechanical watch, an electronic watch etc., as well as an intelligent watch or other wearable devices.

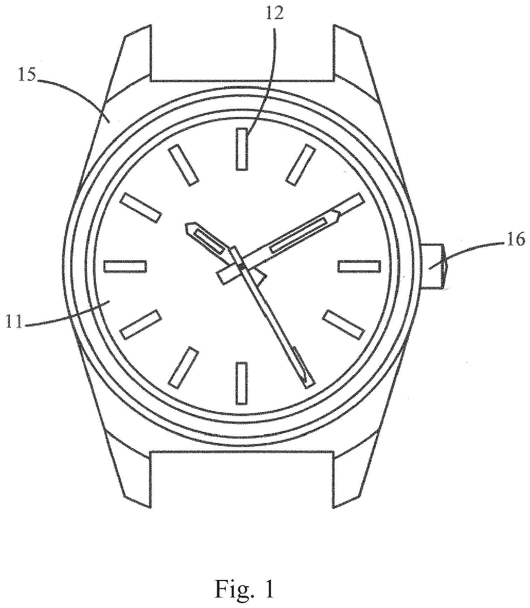

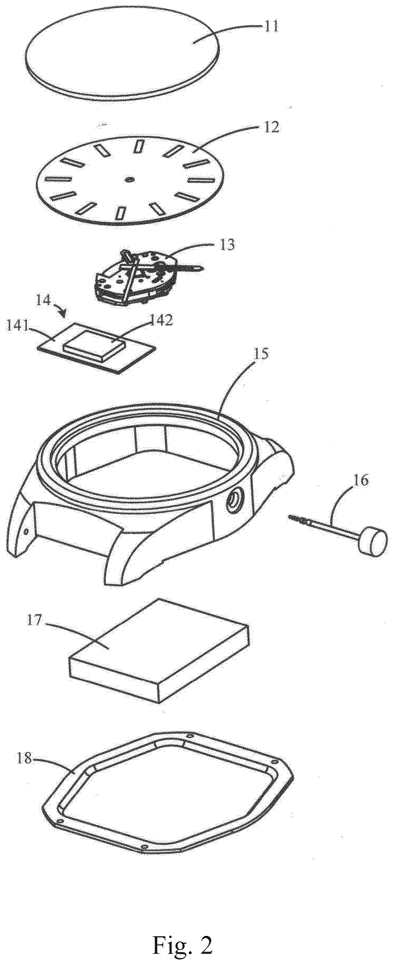

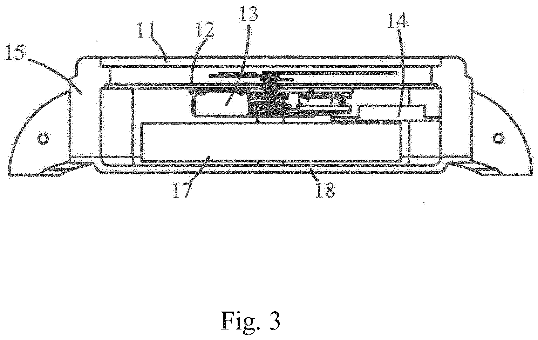

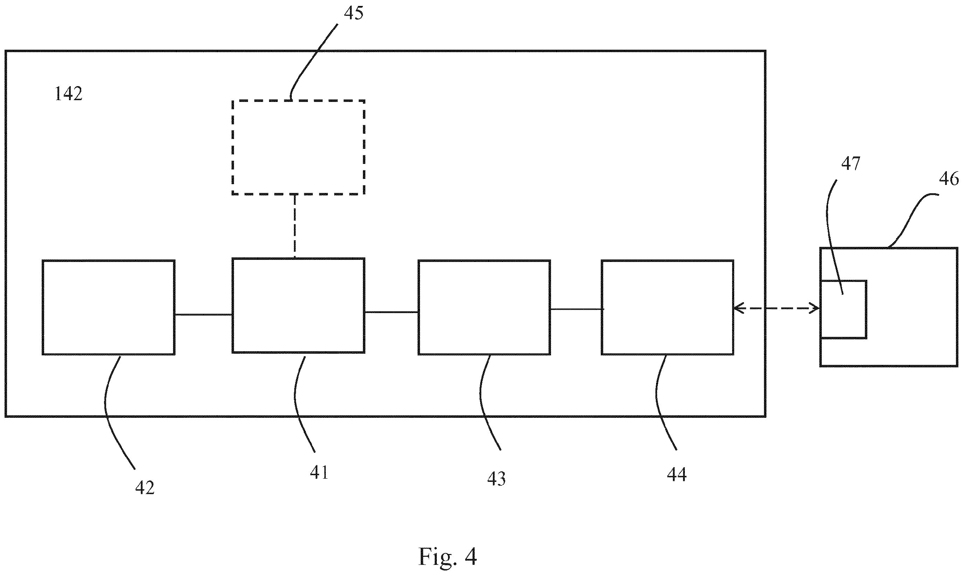

Please refer to Figures 1, 2 and 3. Fig. 1 shows an embodiment of the invented wrist watch in which a wireless control module is embedded and Figs. 2 and 3 respectively show its explosion view and cross sectional view. As shown, the wrist watch has a surface 11, a dial 12, a movement 13, a functional module 14, a casing 15, a crown 16, a battery 17 and a bottom case 18. The surface 11 is made of a transparent material such as glass. A physical time scale is provided on the dial 12 and indicates the scale of one to twelve hours. Indicators such as physical hour, minute and second hands are arranged above the dial 12. The indicators 13 are driven by the movement and, in association with the time scale on the dial 12, display the time. A user can perceive positional information, i.e., time information, displayed by the indicators by looking through the transparent surface 11. Casing 15 and bottom case 18 accommodate and protect the mechanical structure and/or electronic device of the watch. Movement 13, functional module 14 and battery 17 are accommodated in the space defined by the casing 15, the bottom case 18 and the dial 12 (or surface 11). On a lateral side of the watch provided is also a crown 16, for the user to adjust the displayed time or to set the alarm time by turning the knob on the crown 16. The battery 17 provides required power to the movement 13 and/or the functional module 14. The functional module 14 operates wirelessly in association with an external device, i.e., the intelligent mobile terminal 46 (see Fig. 4), thereby enabling the functional module to perform wireless communication with the mobile terminal and making the traditional wrist watch an intelligent watch. In some embodiments, the functional module 14 may be provided on or in the watch strap.

From Figures 1-3 one may appreciate that various designs may be used in the surface 11, dial 12, the movement 13, the casing 15, the crown 16, the battery 17 and the bottom case 18; they all the same provide the functions of that of a traditional wrist watch, in particular a quartz watch. One important feature of this invention is that the wrist watch further includes a functional module 14, i.e., the wireless control module of this invention. That is, an internal space of the traditional quartz watch that is not occupied by its components or is made by moving away certain internal components may be utilized to accommodate the functional module 14, which in turn operates in association with the mobile terminal 46 wirelessly, for the control of the mobile terminal's operations. As a result, a traditional wrist watch may be easily modified to provide the functions of an intelligent watch. The invented functional module 14 may also be embedded in any type of the traditional wrist watch, such as a mechanical watch, an electronic watch or the like, to provide them with the intelligent functionalities. As the internal structure of the traditional watch is similar to that of the quartz watch, detailed description is thus omitted.

In an embodiment of the present invention, the battery 17 supplies power to the movement 13 and the functional module 14. That is to say, power that drives the movement 13 and the functional module 14 (and other electronic devices inside the watch) is supplied by the battery 17. In other embodiments, however, the movement 13 and the functional module 14 independently have their battery and power supplies, for example, two batteries respectively supply power to the functional module 14 and the movement 13.

As shown in Figure 2, the functional module 14 includes a circuit board 141 and package body 142 provided on the circuit board 141. Figure 4 shows the schematic diagram of one embodiment of the functional module 14 according to the present invention and an external device, i.e., a mobile terminal 46 in communication with the functional module 14. The mobile terminal 46 shown in FIG. 4 is an intelligent mobile terminal. Now refer to FIG. 4 along with FIGS. 1-3. As shown, inside the package body 142 the functional module 14 of the present invention comprises a processor unit 41, a detector 42, an command generating unit 43 and a wireless communication unit 44. The processor unit 41, the detector 42, the command generating unit 43 and the wireless communication unit 44 are provided in the circuit board 141 and may be encapsulated into a single (monolithic) package, such as in an SiP (System in Package) structure. Of course, they may also be packaged individually, or integrally with any two of them, and then connected by wires provided in the circuit board to facilitate signal and power transmission among them. The circuit board 141 may be a rigid or flexible multilayer substrate having a plurality of metal layers and a plurality of dielectric layers, with the metal layers distributed among the various dielectric layers, for transmission of electrical signals. The dielectric layers may be prepared by a polyimide material using for example the spin coating technology. The functional module 14 may also include a memory unit 45, for storing data for the processor unit 41 to process. The memory unit 45 can also be integrated in the processor unit 41. The mobile terminal 46 has a wireless signal transceiver 47 for receiving and transmitting wireless signals. The wireless signal transceiver 47 may be for example, a Bluetooth (Bluetooth) transceiver, or an NFC (near field communications) transceiver.

In the embodiment illustrated in Figure 4, the main function of wireless control functional module 14 is to generate control commands in response to motion operations of a user and to provide the control commands to an intelligent particular mobile terminal 42 in order to control operations of the intelligent mobile terminal 46. The detector 42 in this embodiment is a motion detector that detects a motion/displacement of the wireless control functional module 14 under the operation of a user and generates detection signals describing the detected motion or displacements. The detection signals comprise motion components, i.e., acceleration values in at least two directions of the motion or displacements. According to this invention, the wireless control functional module 14 is configured to provide detection signals that represent a plurality of motion patterns in accordance with patterns of motional operations on the functional module by the user. For example, when a user rotates or revolves the functional module 14 along a shaft, the rotation or revolution is detected by the motion detector 42, whereby a "rotation pattern" detection signal representing one rotational or revolution operation is generated. When the user linearly moves the functional module 14 along one direction, the motion is detected by the motion detector 42, whereby a "translation pattern" detection signal representing one translation is generated. When the user swings the functional module 14, the motions of the functional module 14 in opposite directions are detected by the motion detector 42 and a "swinging pattern" detection signal is generated. When the user knocks the casing that encloses the functional module 14 or casing of a device in connection with the functional module 14, the vibration of the casing is detected by the motional detector 42, whereby a "knocking pattern" detection signal is generated. Any other pattern of a motion/displacement or a combination of motions/displacements may be used as a pattern in this invention, as long as it may be represented or described by a series of motional detection signals, i.e, by a series of signals describing acceleration values in two or more directions that in combination represent a motion or a series of motions of the functional module 14.

A detector 42 supporting the functions described above may be any two-axis, three-axis or multiple axis accelerometer commercially available in the market. It is also possible to use two or more single axis accelerators to form a motion detector that serves the needs of this invention. In this patent disclosure, the term "two directions" generally denotes to two axes in a space coordinate system. The "motion components" or acceleration values in two directions defining a motion may also be replaced by an angular velocity. Any motion detector or displacement detector may be used as the motion detector 42 in this invention, as long as detection signals thereof are sufficient to represent a plurality of motion patterns of the wireless control functional module 14, such as a rotation pattern, a translation pattern, a swinging pattern or a knocking pattern.

Detectors that meet the above-mentioned requirements will normally include at least a set of accelerometers or gyroscopes or magnetometers, and a necessary operation circuit. When the wireless control functional module 14 is operated by a user, the motions/displacements of the functional module 14 are detected by the accelerometers and the detection signals of the accelerometers are provided to the operation circuit. The operation circuit uses the detection signals to calculate an angular velocity or acceleration values in two or more directions that represent the motions/displacements of the functional module 14 and outputs the results. In the conventional art there is a variety of accelerometer application circuits useful in detecting patterns of motion or displacement and used in applications such as remote controller for video games, intelligent mobile terminals, safety system for automobile etc. For those having ordinary skills in the art, these application circuits are known technology. In addition, it is also possible to use a set of accelerometers and/or gyroscopes and/or magnetometers to simply generate motion detection signals. The detection signals are then provided to a particular intelligent mobile terminal 46 via the wireless communication unit 44, for interpretation of the detection signals using the operation and storage capabilities of the intelligent mobile terminal 46.

Detector elements described above, such as the accelerator and the gyroscope, as well as the operation circuit applicable to the detector element, are known and commercially available electronic components. Generally speaking, any micro detector module produced using the MEMS technology may be used in the present invention.

The wireless communication unit 44 of the present invention transmits the motion detection signals generated by the detector 42 or commands generated based on the detection signals to an external device. The wireless communication unit 44 may be configured to exchange data with the external device, upon a request signal provided by the external device. Any commercially available wireless communication component, in particular a short distance wireless communication component, may serve as the wireless communication unit 44. The wireless communication unit 44 uses a standard communication channel such as the Bluetooth protocol to connect the particular intelligent mobile terminal 46. The wireless control functional module 14 may be provided with a wireless transceiver, to transmit and receive wireless signals and to exchange information with an external device, upon the request of the external device.

In a preferred embodiment of the present invention, the plurality of useful motion patterns includes at least a translation patter, a rotation pattern and a knocking pattern.

A wireless control functional module 14 with the structure and functions described above detects a motion operation of an user, identifies motion patterns corresponding to the motion operation, sequence and number of the patterns, and generates a series of motion pattern signals. For example:
1. The wireless control functional module 14 is embedded in a wrist watch worn on the wrist of a user. When the user rotates the wrist once, the wireless control functional module 14 outputs a "rotation pattern" signal.
2. The wireless control functional module 14 is embedded in a wrist watch worn on the wrist of a user. When the user knocks the watch surface three times, the wireless control functional module 14 outputs three "knocking pattern" signals or a "knock three times" signal.
3. The wireless control functional module 14 is embedded in a wrist watch worn on the wrist of a user. When the user rotates the wrist once, followed by waiving the hands two times, the wireless control functional module 14 outputs one "rotation pattern" signal and two "translation pattern" signals in sequence.

Other combinations of the motion patterns may be designed and set up in the wireless control functional module application system, according to needs in the operation of the intelligent mobile terminal 46, for future operation and control of the intelligent mobile terminal 46.

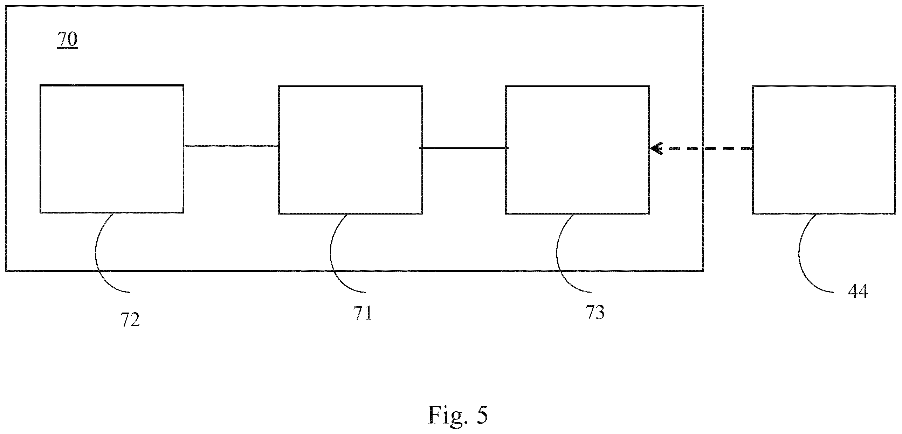

In addition, the wireless control functional module 14 of the present invention may further optionally provide a vibrator 70, to vibrate upon receipt of a control instruction from an external device by the wireless control functional module 14. This optional feature enables the wireless control functional module 14 to function as remote output device for the intelligent mobile terminal 46. Therefore, it is not only a remote input device to the intelligent mobile terminal 46. Figure 5 shows the block diagram of the vibrator 70. As shown, the vibrator 70 basically includes a vibration device 71 to vibrate upon receiving a vibration driving signal; a vibration plate 72 to be attached by the vibration device 71 to amplify the vibration of the vibration device 71; and a controller 73 connected to the wireless communication unit 44 to receive instruction signals from the wireless communication unit 44 and to generate particular vibration driving signals to the vibration device 71 in accordance with the received instruction signals. In the preferred embodiments of the present invention, the vibration driving signal includes descriptions regarding frequency and duration of vibration of a vibration event.

The wireless control module 14 of the invention is used to detect a user's motional operation and to operate the intelligent mobile terminal 46 according to the motional operations of the user. In the preferred embodiments of the present invention, the intelligent mobile terminal 46 may be a mobile phone, a smartphone, a personal digital assistant, a tablet, an Arduino interactive installations, a Raspberry Pi or a similar portable device. In order to operate the intelligent mobile terminal using the wrist watch, it is necessary to install a wireless control functional module application system in the intelligent mobile terminal 46. In most cases the intelligent mobile terminal 46 is a smartphone or a tablet computer, therefore, is equipped with various functional modules, such as a touch screen module, a mobile phone module, a camera module, a network communications module, a short-distance wireless communication module, voice input and output modules. The wireless control functional module application system is installed in the intelligent mobile terminal, in order to utilize the powerful calculation, memory and display capacities of the intelligent mobile terminal to establish a parameter setting module 60, for users to setting up inference rules of particular application programs. The inference rules of the application programs correlate a motion detection signal, a motion pattern signal or a command provided by the functional module and corresponding actions of the intelligent mobile terminal, so that the application program operates one or more of the touch screen module, mobile phone module, cameral module, network communications module, short-distance wireless communication module, voice input/output module etc. upon receipt of a motion detection signal, a motion pattern signal or a command, to take desired actions.

For example, the wireless control functional module application system may be configured to interpret a particular combination of motion pattern signals as an action command and activate the network communications module of the intelligent mobile module 46 to establish a communication connection or a network communication connection upon receipt of the combination generated by the wireless control functional module 14, and to generate particular requests and/or provide particular information after the communication connection is established. A particular application program may be configured to interpret another combination of motion pattern signals of the wireless control functional module 14 as an action command and activate the camera module of the intelligent mobile terminal 46 to take a picture. Another application program may be configured to interpret a further other combination of motion pattern signals of the wireless control functional module 14 as an action command and activate the display module of the intelligent mobile terminal 46 to display particular information. In another embodiment of the invention, the wireless control functional module 14 is embedded with a vibrator 70 as described above. In such an embodiment, an application program may be configured to interpret a further other combination of motion pattern signals of the wireless control functional module 14 as an action command and activate the vibrator 70 of the wireless control functional module 14 to generate a particular vibration pattern. It is also possible to so configure an application program, that it activates the vibrator 70 of the wireless control functional module 14 after a previous action command is executed.

Although in practical applications the wireless control functional module application system is installed in the intelligent mobile terminal 46 in the form of a software, so to utilize the functional modules equipped in the intelligent mobile terminal 46 to establish the parameter setting module 60, it is also possible to provide a command generating unit and a processor unit in the wireless control functional module, after the application system is installed. In the preferred embodiments of this invention, the respective application programs would include at least one inference rule, which comprises at least one event and an action to be activated by the event. In particular embodiments, the inference rules may further logical operations of a plurality of events, such as the "AND", "OR" or "NAND" operations among events.

In the preferred embodiments of the present invention, the "event" of an inference rule may be a motion detection signal and/or a motion pattern signal and/or a control command, generated by the wireless control functional module 14. To be more specific, the event may be a series of motion detection signals detected by the detector 42 and representing a series of motional operations on the wireless control functional module 14 by a user. Each motion detection signal includes acceleration value in at least two directions of a motion component of the motional operations. An event may also be a series of motion pattern signals representing one motional pattern or a combination of plural motion patterns. It may also be a command generated from the interpretation of a combination of motion pattern signals.

In the preferred embodiments of the present invention, an action determined by the inference rule is generally a command that actuates one or more functional modules of the intelligent mobile terminal to execute a particular operation. The action may also actuate an operational module, such as the vibrator 70, of the wireless control functional module 14 to execute a particular operation. In application, an operation triggered by the action command may be generating a voice message (including parameters defining its volume, rhythm or frequency) or a digital message, sending a short message (including parameters defining the receiver and contents of the message), generating vibrations (including parameters defining the amplitude, frequency and duration of the vibration), displaying a graphic message, connecting a web address, providing voice or digital information etc. The operation may also be one that generates digital information, such photographing, sound recording, video recording or data recording.

To be more specific, an inference rule may be expressed by the followings:
If (Event A) [(logical relation i) Event i]n, then Action 1, wherein n is a natural number, i is a natural number from 2 to n. Here, an Action may be an operation that actuates one or more functional module of the intelligent mobile terminal.

In application, examples of the inference rules may include the followings:
1. When a "rotating pattern signal" is received (Event A), actuate the camera module to take a photo or start recording (Action 1).
2. When tree "translation pattern signals" are received (Event A), actuate the mobile phone module to dial a particular phone number or send a particular text message to a particular phone number (Action 1).
3. When two "swing pattern signals" are received (Event A), actuate the voice module to generate a voice message (including parameters defining volume, rhythm and frequency of the voice) or actuate the screen display module to display a text message (Action 1).
4. When three "knocking pattern signals" (Event A) and (logical relation) two "translation pattern signals" are received (Event 1), actuate the camera module to start recording (Action 1) and (logical relation) actuate the Internet communication module to transmit the recorded video to a specific URL (Action 2).
5. When an incoming call is detected (Event A) and (logical relation) the answer key of the intelligent mobile terminal 46 is not actuated within a predetermined time (Event 1), actuate the short distance wireless communication module to send a vibration command to the wireless control functional module 14, so to have the vibrator 70 to vibrate (Action 1).
6. When a "knocking pattern signal" from the wireless control functional module 14 is received (Event A) and (logical relation) no other motion pattern signals are received within a predetermined time (Event 1), actuate the short distance wireless communication module to send a vibration command to the wireless control functional module 14 (Action 1), so to have the vibrator 70 to vibrate.

Although several examples of the "events," "actions" and "logical relations" are illustrated above, any application that utilizes the wireless control functional module 14 as an remote input device and/or output device of the intelligent mobile terminal may be defined by the user by using the wireless control functional module application system, to generate a useful application program.

In the design of the present invention, the wireless control functional module 14 can produce a variety of motion pattern signals, including the rotating pattern signal, the translation pattern signal, the knocking pattern signal, as described above. In such a case, If an operation command is defined by 4 motion patterns, totally 3*3*3*3=81 different commands may be defined. Such an instruction set would be sufficient for the needs of remotely operating the intelligent mobile terminal 46.

Although the invention has been described with reference to specific embodiments regarding the wrist watch type wireless control module and its application system, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A wrist watch, comprising a dial provided with a physical time scale, at least one watch hand on the dial and a movement to drive the watch hand, a housing to encompass the movement, a strap connected to the housing and a wireless control functional module disposed in the housing or in the strap, to control an external device; wherein the wireless control functional module comprises:
a detector unit to detect a displacement of the wrist watch and to generate a detection signal in correspondence with the displacement;
a processor unit coupled with the detector unit, to receive the detection signal of the detector unit and to match the detection signal with a motion pattern among a plurality of motion patterns stored in a memory device wherein the matched motion pattern corresponds to the displacement;
a wireless communication unit to transmit and receive wireless signals and to establish wireless communication channels with an external device upon request of the external device for exchange of data; and
a command generating unit coupled with the processor unit and the wireless communication unit, to generate a motion pattern signal in a predetermined format according to motion pattern matched by the processor unit and to provide the motion pattern signal to the wireless communication unit, for transmitting to the external device;
wherein the motion pattern signal comprises at least one selected from the group consisted by a translation pattern signal, a rotation pattern signal and a knocking pattern signal.

2. The wrist watch according to claim 1, wherein the external device is a mobile intelligent terminal.

3. The wrist watch according to claim 1, wherein the motion pattern further comprises a swinging motion.

4. The wrist watch according to claim 1, wherein the rotation motion pattern comprises a rotational or a revolution motion.

5. The wrist watch according to claim 2, wherein the motion pattern signal transmitted to the external device actuates a camera module of the intelligent mobile terminal to take a photo or start recording.

6. The wrist watch according to claim 2, wherein the motion pattern signal transmitted to the external device actuates a mobile phone module of the intelligent mobile terminal to make a phone call or to send a short message to a particular telephone number.

7. The wrist watch according to claim 2, wherein the motion pattern signal transmitted to the external device actuates an network communication module of the intelligent mobile terminal to connect a web address.

8. The wrist watch according to claim 2, wherein the motion pattern signal transmitted to the external device actuates an audio module of the intelligent mobile terminal to generate a voice message (including parameters defining its volume, rhythm or frequency).

9. The wrist watch according to claim 2, wherein the motion pattern signal transmitted to the external device actuates a display module of the intelligent mobile terminal to display a particular message.

10. A method for operating an external device using a wrist watch wherein the wrist watch is not equipped with any touch screen, button or function key; the method comprising the following steps:
providing a detector unit in the wrist watch to detect a displacement of the wrist watch and to generate a detection signal in correspondence with the displacement;
providing a processor unit coupled with the detector unit, to receive the detection signal of the detector unit and to match the detection signal with a motion pattern among a plurality of motion patterns stored in a memory device wherein the matched motion pattern corresponds to the displacement;
providing a command generating unit coupled with the processor unit, to generate a motion pattern signal in a predetermined format according to motion pattern matched by the processor unit;
providing a wireless communication unit coupled with the command generating unit, to provide the motion pattern signal to the external device, whereby the external operates or acts in response to a command corresponding to the motion pattern signal;
wherein the motion pattern signal comprises at least one selected from the group consisted by a translation pattern signal, a rotation pattern signal and a knocking pattern signal.

11. The method according to claim 1, wherein the external device is a mobile intelligent terminal.

12. The method according to claim 10, wherein the motion pattern further comprises a swinging motion.

13. The method according to claim 10, wherein the rotation motion pattern comprises a rotational or a revolution motion.
